# EUROPEAN PATENT APPLICATION

(11) **EP 2 472 375 A1**
(43) Date of publication of application: **04.07.2012**
(21) Application number: 10819830.0
(22) Date of filing: 28.06.2010
(51) Int. Cl.: G06F 3/048

(54) **METHOD AND DEVICE FOR IDENTIFYING AND UNLOCKING WITH CONTACT SURFACE MODEL**

(30) Priority: 29.09.2009 CN 200910176389
(71) Applicant: ZTE Corporation, Shenzhen, Guangdong 518057 (CN)
(72) Inventor: WU, Hongchao, Shenzhen Guangdong 518057 (CN)
(74) Representative: Grey, Ian Michael
(86) International application number: PCT/CN2010/074638
(87) International publication number: WO 2011/038601

(57) **Abstract**

Provided are a method and apparatus for identifying and unlocking with a contact surface model. The method includes: associating a predefined contact surface shape with a user interface state; and when a device detects that a contact surface shape formed by a user on a touch screen is the same as or similar to the predefined contact surface shape, switching the device to the user interface state corresponding to the predefined contact surface shape.

## Description

### Technical Field

The present invention relates to the electronic unlocking technology and, especially, to a method and apparatus for identifying and unlocking with a contact surface model on a portable electronic device.

### Background of the Related Art

In this field, many electronic devices select the touch screen to be a user interface for providing an interaction between the user and the device. The touch screen detects and responds to the contact thereon. The device can display one or more soft keys, menus, and other user interface objects by way of the touch screen, and the user can interact with the device by contacting the touch screen locations corresponding to the user interface objects. Usually, the touch screen operates independently from the displayer, however, the displayer sometimes would be embedded with the touch function, and for the sake of convenient description, the portion of the displayer with the touch function is also referred to as a touch screen.

On portable devices such as mobile phone and personal digital assistant (PDA), the touch screen is increasingly used as a user input device. If the touch screen is used on the portable device, one problem accompanying therewith is: the unconscious contact with the touch screen will activate or stop some function unconsciously. A common method for solving this problem is: once a predetermined user interface locking condition is satisfied, such as entering an active call, after a predetermined idle time, or the user manually locking it, then the portable device, touch screen and the user interface of the applications running on such device can be locked. For those portable devices without keypads and with a difficulty in operating the keys thereof, such device can be unlocked by operating the touch screen. To accomplish the unlocking action by operating the touch screen according to the interface displayed by the device is intuitive and easy to use.

There are two well-known unlocking methods for operating the touch screen so as to switch the device from a user interface locking state to a user interface unlocking state: one of them is to touch a group of predetermined soft keys displaying on the touch screen so as to input a code or password, and this method is also referred to as point operation. Such unlocking process has the following defects: 1. the soft keys occupy too much of the user interface; 2. the input manner is cumbersome; 3. it is cumbersome to create, memorize and recall the password. The second method is to drag the slider to accomplish a predetermined track action with fingers or a touch pen, and this method is also referred to as line operation. The defects thereof are: 1. the predetermined track still occupies relatively large user interface; 2. the operation is still cumbersome; and 3. the privacy is poor and those users other than the owner of the device cannot be prevented from unlocking the device.

Accordingly, we need to unlock the portable device, touch screen and relevant applications with a process which occupies quite few of the user interface with good privacy and easier operation. More generally, a more effective and user-friendly process is needed to switch such device, touch screen and applications between user interface states (for example, switching from the user interface state of a first application to the user interface state of a second application, switching between the user interface states of an identical application, or switching between the locking and unlocking states) Furthermore, when the input condition is satisfied and interface switching occurs, it still needs to provide feeling feedback about the switching progress to the user.

### Summary of the Invention

In view of this, the main object of the present invention is to provide a method and apparatus for identifying and unlocking with a contact surface model. They are used for solving the technical defects in related art that: when switching the device active state by operating the touch screen, a great deal of the interface is occupied for operation, the operation is cumbersome, and the privacy is rather poor.

In order to achieve the above object, the technical solution of the present invention is achieved as follows:
A method for identifying and unlocking with a contact surface model includes:
   associating a predefined contact surface shape with a user interface state, and when a device detects that a contact surface shape formed by a user on a touch screen is the same as or similar to the predefined contact surface shape, switching the device to the user interface state corresponding to the predefined contact surface shape.

Furthermore, a plurality of predefined contact surface shapes are associated with one or more user interface states, and when it is detected that a contact surface shape formed by the user on the touch screen is the same as or similar to a predefined contact surface shape or it is simultaneously detected that a plurality of contact surface shapes formed by the user on the touch screen are the same as or similar to a plurality of predefined contact surface shapes, the device is switched to the user interface state corresponding to the one or more predefined contact surface shapes.

Furthermore, the user interface state includes a user interface locking state and a user interface unlocking state, the predefined contact surface shape includes a predefined contact surface shape for unlocking the user interface; if the device is in the user interface locking state, when the device detects that the contact surface shape formed by the user on the touch screen is the same as or similar to the predefined contact surface shape for unlocking the user interface, the device is switched to the user interface unlocking state.

Furthermore, the user interface state includes a user interface state when an application is running; if the device is in the user interface locking state, when the device detects that the contact surface shape formed by the user on the touch screen is the same as or similar to the predefined contact surface shape, the interface of the device is unlocked and the application corresponding to the predefined contact surface shape runs so as to switch the device to the user interface state when the corresponding application is running.

Furthermore, the user interface state includes an application unlocking state, and the predefined contact surface shape includes a predefined contact surface shape for switching the application from the locking state to the unlocking state; if one certain application on the device is in the locking state, when the device detects that the contact surface shape formed by the user on the touch screen is the same as or similar to the predefined contact surface shape for unlocking this application, then this application is unlocked.

Furthermore, when detecting the contact surface shape formed by the user on the touch screen, a touch area for detecting an input is formulated and prompted, and the contact outside the formulated touch area is regarded as being invalid.

Based on the above method, an apparatus for identifying and unlocking with a contact surface model is also proposed in the present invention, the apparatus includes:
a predefinition module for associating a predefined contact surface shape with a user interface state;
a detection judgment module for detecting and judging whether a contact surface shape formed by a user on a touch screen is the same as or similar to the predefined contact surface shape; if they are the same or similar, then notifying a state switching module to perform state switching; and
a state switching module for performing device active state switching according to the judgment result of the detection judgment module.

Furthermore, the predefinition module associates a plurality of predefined contact surface shapes with one or more user interface states; when the detection judgment module detects that a contact surface shape formed by the user on the touch screen is the same as or similar to the predefined contact surface shape or simultaneously detects that a plurality of contact surface shapes formed by the user on the touch screen are the same as or similar to a plurality of predefined contact surface shapes, the state switching module switches the device to the user interface state corresponding to the one or more predefined contact surface shapes.

In the present invention, the switching of the active states of the user device is achieved by detecting and identifying the contact surface shape formed on the touch screen, since it is the identification of the contact surface, less user interface will be occupied; since it only needs to press an object on the touch screen, the operation is much easier; and when the contact surface shape of the finger front is used as the unlocking predetermined shape, the difference between different user fingers makes the privacy of unlocking better, and such unlocking manner can also perform the password protection function of applications or documents.

### Brief Description of Drawings

Fig. 1 is a diagram of the composition structure of a portable electronic device in a preferred embodiment of the present invention;
Fig. 2 is a processing flowchart of switching a device from a user interface locking state to a user interface unlocking state in the present invention;
Fig. 3 is a processing flowchart of performing similarity judgment during unlocking in the present invention;
Fig. 4 is a flowchart of unlocking an application in the present invention;
Figs. 5A-5B illustrate the interface when a device is in the user interface locking state in one embodiment of the present invention;
Figs. 5C-5E illustrate user interfaces at different time points when a device is during the execution of an unlocking action in one embodiment of the present invention;
Fig. 5F illustrates an interface which can be switched to a plurality of user interface state in one embodiment of the present invention; and
Fig. 6 is a schematic diagram of the logic structure of an apparatus for identifying and unlocking with a contact surface model in the present invention.

### Preferred Embodiments of the Present Invention

The core concept of the present invention is to associate a contact surface shape formed on the touch screen with a user interface state of a device, wherein when the device detects that a contact surface shape formed by a user on a touch screen is the same as or similar to the predefined contact surface shape, the device state is switched to the user interface state corresponding to the predefined contact surface shape. The user interface state in the present invention can be an interface state after the device is unlocked and can also be a user interface state when an application is running.

In order to make the object, technical solution and advantages of the present invention more clear, the present invention will be further described in detail by way of embodiments with reference to the accompanying drawings.

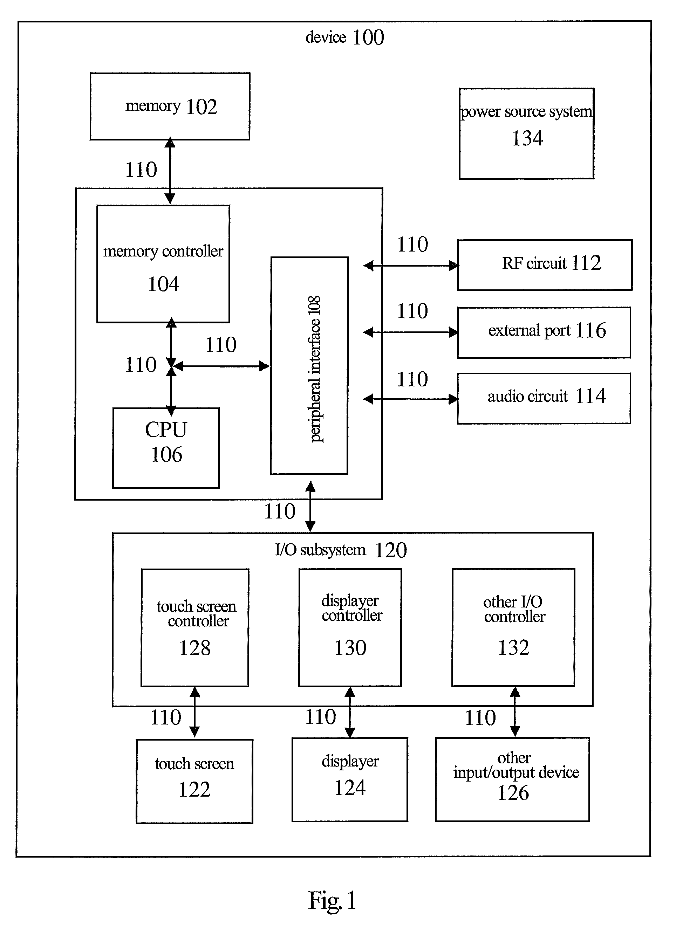

Fig. 1 is a structural schematic diagram of a portable electronic device capable of implementing a method of the present invention. A device 100 includes a memory 102, a memory controller 104, one or more processing units (CPU) 106, a peripheral interface 108, a radio frequency (RF) circuit 112, an audio circuit 114, an external port 116, an input/output subsystem 120, a touch screen 122, a displayer 124, and other input/output device 126. These components communicate via one or more communication buses or signal lines 110. The device 100 can be any portable electronic device, including but not limited to handheld computer, mobile phone, media player, personal digital assistant (PDA), etc., and further including a combination of two or more thereof. It should be understood that the device 100 is merely an example of the portable electronic device, and the components of the device 100 can have more or fewer components than those shown in the figure or have different component configurations. Various components shown in Fig. 1 can be implemented using hardware, software, or a combination thereof, including one or more signal processing and application specific integrated circuits.

The memory 102 can include a random access memory and can also include one or more disk storage devices, flash devices or other non-volatile memories. The memory controller 104 can control the access to the memory 102 by other components of the control device 100 such as CPU 106 and the peripheral interface 108.

The peripheral interface 108 couples the input and output periphery of the device to the CPU 106 and memory 102. The one or more processors 106 operate various software programs stored in the memory 102 so as to carry out various functions of the device 100 and process the data.

The RF (radio frequency) circuit receives and sends electromagnetic waves. This RF circuit 112 transforms an electrical signal into electromagnetic waves or transforms the electromagnetic waves into an electrical signal, and communicates with the communication network and other communication devices using the electromagnetic waves.

The audio circuit 114 provides an audio interface between the user and the device 100. The audio circuit 114 receives audio data from the peripheral interface 108, transforms the audio data into an electrical signal, and sends the electrical signal to a loudspeaker. The loudspeaker transforms the electrical signal into audible sound waves. The audio circuit 114 also receives the electrical signal transformed from the sound waves by a microphone. The audio circuit 114 transforms the electrical signal into audio data and sends the audio data to the peripheral interface 108 for processing.

The I/O subsystem 120 provides an interface between the input/output periphery of the device 100 and the peripheral interface 108, and the input/output periphery is such as a touch screen 122, a displayer 124 and other input/output control device 126. This I/O subsystem 120 includes a touch screen controller 128, a displayer controller 130 and one or more controllers 132 for other output or control devices.

The touch screen 122 and displayer 124 provide an input interface and an output interface between the device and the user respectively. The displayer 124 displays visible output to the user, and the output can include text, graphics, video and any combination thereof. The touch screen 122 is a touch sensitive surface accepting the user input and detects the contact on the touch screen 122 together with the touch screen controller 128 and transforms the detected contact into the interaction with the user interface object on the displayer. The touch screen 122 and touch screen controller 128 can detect the contact using any one of a plurality of touch technologies, and these touch technologies include but are not limited to capacitor, resistor, infrared and sound surface wave technologies and other proximity transducer arrays. However, these touch technologies not only can identify the location of the touch point but also can identify the particular shape of the touch surface, and the contact surface shape can also be expressed using a set of point coordinates. The user can use any suitable articles or accessories, such as pointing pen, finger, etc., to touch the touch screen 122.

The device 100 also includes a power source system 134 for supplying power to various components. This power source system 134 can include a power source management system, one or more power sources (such as battery, alternating current (AC)), charging system, power source fault detection circuit, power source converter, and any other components associated with the electrical energy generation, management and distribution in the portable device.

The device 100 can have a plurality of user interface states. The user interface state is a state responded by the device 100 to the user input in a predetermined manner. In some embodiments, the plurality of user interface states include a user interface locking state and a user interface unlocking state. In some embodiments, the plurality of user interface states include a user interface state when a plurality of applications are running.

In the user interface locking state, the device 100 is energized and operable, but not responsive to the contact on the touch screen 122 to execute a predetermined operation set. This predetermined operation set can include a navigation between user interfaces and the activation or stopping of a predetermined function set. This locking state can prevent the device 100 from being used unconsciously or in an unauthorized way, or activate/stop the functions of the device 100. However, after being locked, the device 100 still can respond to limited types of contact on the touch screen 122. The limited types include a contact which is determined by the device 100 as an attempt of switching the device 100 to the user interface unlocking state.

In the user interface unlocking state, the device 100 is in its normal operating state, detects and responds to those user inputs performed using the touch screen 122 and corresponding to the interaction with the user interface, such as navigation between interfaces, data input, the activation or stopping of some functions, etc.

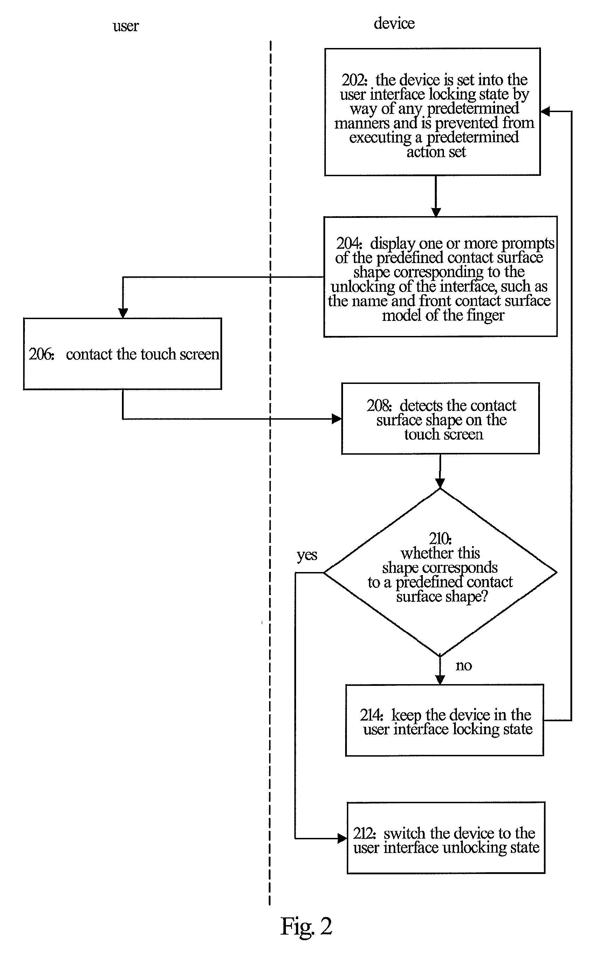

Fig. 2 is a processing flowchart of switching a device from a user interface locking state to a user interface unlocking state in a particular embodiment of the present invention, and in this embodiment, it first needs to associate one or more predefined contact surface shapes for unlocking the user interface with the user interface unlocking state, and the particular steps are as follows:
Step 202: the device is set into the user interface locking state by way of any predetermined manners and is prevented from executing a predetermined action set;
   in the user interface unlocking state, once any of one or more locking conditions is satisfied, this device can be set into the user interface locking state immediately. These locking conditions can include the following events: a predetermined passive time expiring, entering an active call, or locking of user input, etc.
Step 204: it is to display one or more prompts of the predefined contact surface shape corresponding to the unlocking of the interface, such as the name and front contact surface model of the finger;
   in some embodiments, the locked device will display one or more visible prompts for the user to perform interface unlocking on the touch screen. The one or more visible prompts will provide a hint or warning of the unlocking operation to the user. These visible prompts can be text, graphics, or any combination thereof. The visible prompts in the present invention describe the predefined contact surface shape for interface unlocking. Generally, when the device is locked and a specific event occurs, the visible prompts will be displayed. Specific events triggering the visible prompts include: incoming call, message received, or some other events which may need the user to pay attention to. In some embodiments, these visible prompts can also be displayed during a specific user input, for example, when the user interacts with the menu button, the user contacts the locked touch screen, or the user interacts with any other input/output control devices. When these visible prompts are not displayed, the locked device can switch off the displayer so as to save power, or display other objects, such as screen protection program, remaining battery capacity, date and time, network strength, etc.
Step 206: when the user interface is locked, the user can start to contact the touch screen. In this procedure and other embodiments described in the following, this contact can be accomplished using any articles or accessories which can be carried around and not easy to be lost, such as pointing pen, finger, etc.
Step 208: when the user contacts the touch screen, the device detects the contact surface shape formed by the article on the touch screen.
Step 210: the device judges whether the contact surface shape formed by the article on the touch screen is the same as or similar to a predefined contact surface shape for unlocking one certain interface, if yes, then this device will be unlocked and switched to the user interface unlocking state. If this contact surface shape is not corresponding to any predefined contact surface shape, then this device will be kept in the locking state. In some embodiments, the contact time can be added as one of the unlocking conditions. If the user does not maintain the contact gesture and causes the contact time too short, then this device will be kept locked. As such, the device being unlocked due to accidental contact can be avoided, and the user can also temporarily change the unlocking attempt during the unlocking action.

In the present invention, the information about the predefined contact surface shape corresponding to the user interface state will be pre-stored in the memory of the device 100, which can be a custom contact surface shape of the user and can also be a default contact surface shape of the device, however, this predefined contact surface shape should be larger than the minimum contact surface which can be identified by the device 100. The best contact surface shape defined by the user is a contact surface shape between the finger front end and the touch screen. Finger is a natural portable article, and the shape formed by the contact between the finger front end and the surface differs from man to man and is not easy to be copied by other articles. These features can ensure the privacy when the user unlocks the device and can also avoid the device being unlocked accidentally. For the sake of description, in the procedure of Fig. 2 and the following embodiments, the present invention will be described by taking one or more fingers as an example. It should be known that the articles used during the unlocking process in the present invention are not limited to fingers.

The judgment of whether the contact surface shapes on the touch screen is the same as or similar to one predefined contact surface shape is accomplished by the CPU of the device. The CPU calculates the similarity between the contact surface shape and the predefined contact surface shape according to a suitable similarity algorithm, and when the similarity obtained by calculation reaches a predetermined similarity threshold of the device 100, the CPU judges that this contact surface shape and the predefined contact surface shape are the same or similar. The above similarity threshold can be defined by the user.

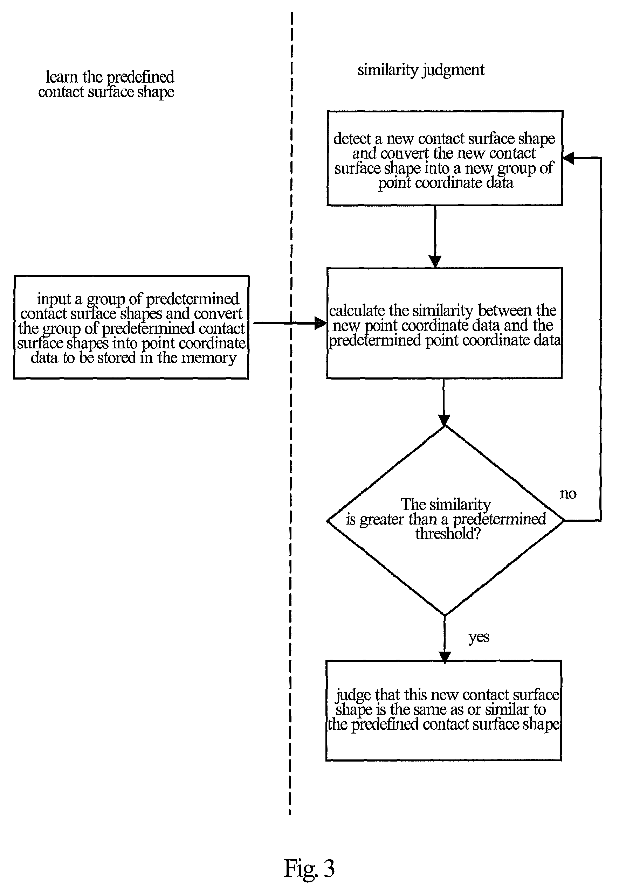

The judgment process by the CPU of whether the inputted shape corresponds to the predefined contact surface shape is as shown in Fig. 3. First, the device needs to learn the predefined contact surface shape. When the device is in a predetermined shape learning state, the user inputs the predefined contact surface shape by contacting the touch screen, and this predefined contact surface shape corresponds to a set of contact point coordinate data on the touch screen and stored in the memory of the device. When the device executes user interface unlocking or interface state switching, it is exactly the process of repetitively inputting the predetermined shape. During this process, first, the device acquires a group of new contact surface shapes, converts the group of new contact surface shapes into point coordinate data, then calculates by the CPU the similarity between the point coordinate data of the new contact surface shape and that of the predefined contact surface shape, and the CPU judges whether this similarity is greater than the predetermined threshold, if it reaches the predetermined threshold, then it is judged that the new detected contact surface shape is the same as or similar to the predefined contact surface shape; and if it does not reach the predetermined threshold, then the device will carry out the acquisition again and enters the previously described judgment process.

For the procedure shown in Fig. 2, in some embodiments, when the device is in the user interface locking state, the user interface state to which the device is switched by way of the above unlocking action can be unique, for example, the user interface unlocking state of the device and other user interface states. While in some embodiments, when the device is unlocked, this device can be switched to the user interface state when a plurality of applications are running. For example, in one embodiment, the user interface state corresponding to the contact surface shape of the thumb front end of the left hand is the user interface state when the contact list program is running; the user interface state corresponding to the contact surface shape of the index finger front end of the left hand is the user interface state when the call records program is running; and the user interface state corresponding to the combined contact surface shape of the middle finger front end and the index finger front end of the left hand is the user interface state when the short message program is running. During unlocking, the device can be switched to the corresponding user interface state as long as the contact surface shape inputted by the user is the same as or similar to the corresponding predefined contact surface shape.

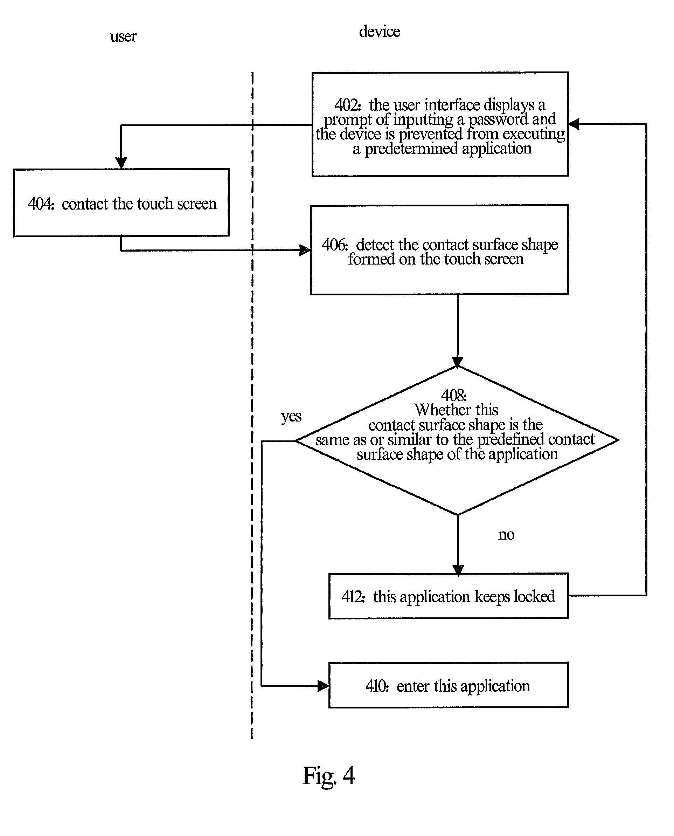

In some embodiments, the above unlocking method can also be used as the password input for unlocking an application. Fig. 4 is a flowchart of unlocking an application in the present invention.
Step 402: the device is already in the user interface unlocking state, and when it will enter a user application, the user interface prompts that a password needs to be inputted;
Step 404: the user contacts the touch screen;
Step 406: the device detects the contact surface shape formed by the user on the touch screen;
Step 408: it is to judge whether the contact surface shape identified by the device is the same as or similar to the predefined contact surface shape corresponding to this application, if yes, then performing step 410, otherwise proceeding to step 412;
Step 410: it is to enter this application, and the application is unlocked successfully; and
Step 412: the device maintains the locking state of this application.

When the user interface or application is locked, as described above, this device can display one or more visible prompts of the unlocking action. In some embodiments, the device can formulate and prompt an area for unlocking contact, and for the contact outside this area, the contact surface shape can not be identified. This avoids the unlocking caused by accidental unconscious contact. In some embodiments, the device displays a real-time unlocking image. The unlocking image is a graphic interacted user interface object, which displays the real-time shape of the contact surface during unlocking and can be displayed overlapped with a predetermined unlocking shape, and such visible contrast guides the user to successfully complete the unlocking operation.

In some embodiments, in addition to visible feedback, the electronic device will also provide invisible feedback so as to indicate the completion progress of the unlocking action. It includes audio feedback (such as sound) or physical feedback (such as vibration).

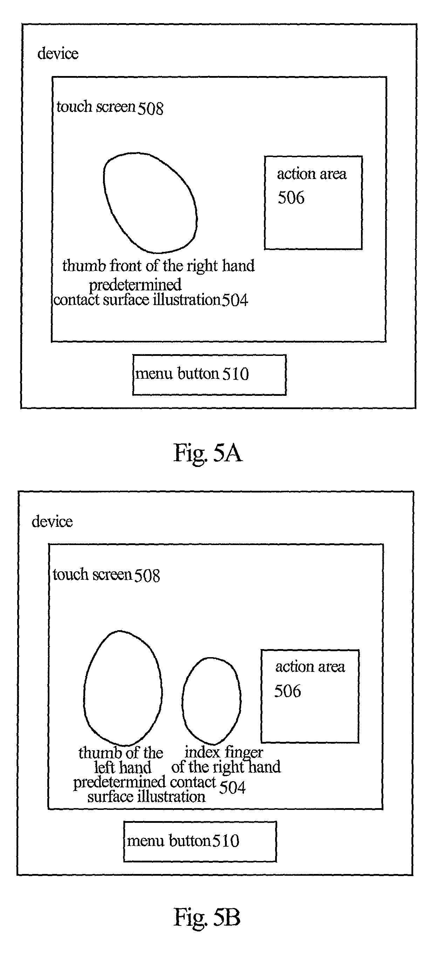

Figs. 5A-5B illustrate interfaces of application locking when a device is in the user interface locking state according to some embodiments of the present invention. In Fig. 5A, the device includes a touch screen 508 and a menu button 510. This device is in the interface locking state, and the touch screen 508 is displaying an unlocking visible prompt. The displayed visible prompt can include a predefined contact surface shape 504 and an action area prompt 506. The predefined contact surface shape prompts the user to use a correct article contact surface to carry out unlocking. In some embodiments, a word prompt can also be added to further describe the predefined contact surface shape, such as the "thumb front end of the right hand" in 504. The action area 506 formulates the input area for unlocking the device. The contact surface input can only be accomplished within the action area, and the device regards the input outside this area as failed unlocking operation. The formulation of the action area can avoid the unconscious unlocking operation of the user as much as possible. The possibility for the user to accomplish the unlocking input within a relatively smaller area 506 is much smaller than that for the user to accomplish the unlocking input within the entire touch screen in the unconscious state. The formation of the action area also reduces the workload of the CPU and fastens the unlocking speed. Since the device only needs to detect the contact within the relatively small area 506, it is unnecessary to detect the whole touch screen.

In some embodiments, the predefined contact surface shape is set to be more complicated, and it can simultaneously include two or more contact surface shapes, i.e. a plurality of predefined contact surface shapes required to be inputted simultaneously can be associated with a user interface state. For example, as shown in Fig. 5B, the predefined contact surface shape for unlocking the user interface can be defined as the contact surface shape formed by the thumb front end of the left hand and the index finger front end of the right hand being on the touch screen simultaneously. Such complicated predefined contact surface shape increases the unlocking condition, which can avoid the unconscious unlocking operation of the user as far as possible and can also increase the privacy of unlocking, better preventing those users other than the owner of the device from unlocking this device.

The visible prompts shown in Figs. 5A and 5B prompt the user that this unlocking action is a predetermined contact surface, and the unlocking can be accomplished as long as the predetermined contact surface shape can be satisfied. It should be understood that the visible prompts shown in Figs. 5A and 5B are merely illustrative, and more or fewer visible prompts or visible prompts of the contact surface shapes of other articles can be used.

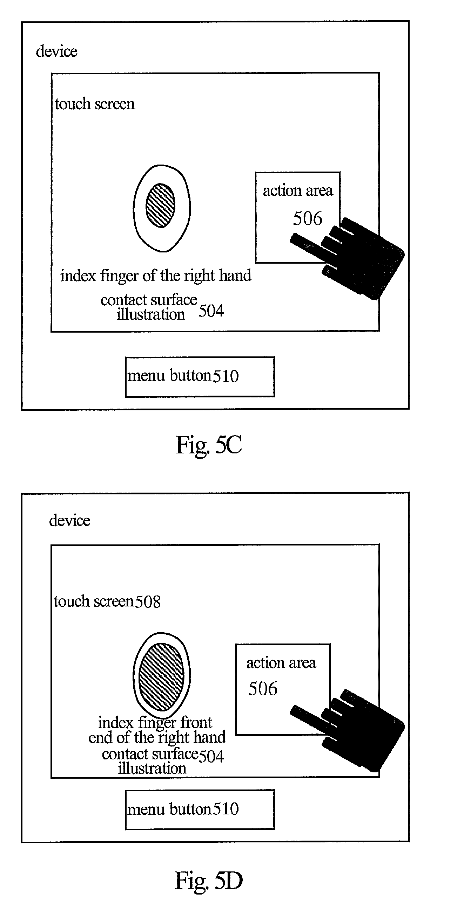

Figs. 5C-5E illustrate user interfaces at different time points when a device is during the execution of an unlocking action in one embodiment of the present invention. In Fig. 5C, the user touches the action area of the device using a finger thereof and starts to perform the unlocking action. The touch screen 508 will display an unlocking image when the finger contacts it at the beginning, and when the finger front end continues to enlarge the contact surface, the device detects the contact surface shape and displays the contact surface shape in a contact surface illustration 504.

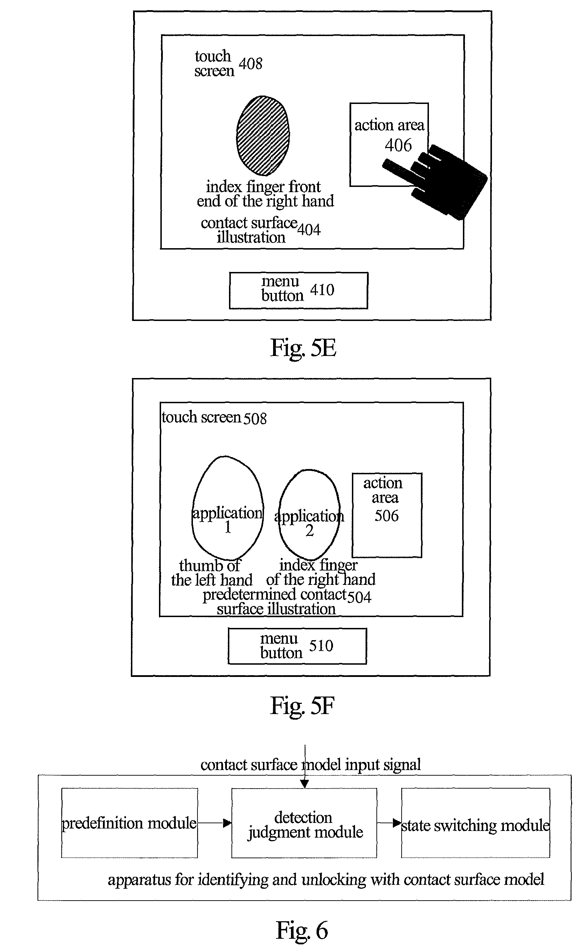

In Fig. 5D, the user is in the process of continuously pressing his finger to perform the unlocking of the contact surface. When the contact surface between the finger front end and the touch screen enlarges continuously, the contact surface illustration 504 displays that the actual contact surface is gradually proximate to the predefined contact surface shape. In Fig. 5E, the contact surface illustration 504 displays that the predetermined contact surface has been fully filled with shadow, and the actual contact surface matches the predefined contact surface shape, in this case, the unlocking action is completed, and the predetermined user unlocking interface is displayed on the touch screen 508. In some embodiments, after the actual contact surface matches the predefined contact surface shape, the contact should also be kept for a predetermined contact time so as to unlock the device. After the actual contact surface matches the predefined contact surface shape, if the user gives up the touch action halfway during the predetermined contact time for which the unlocking action should be kept, then the device returns back to the initial state.

Fig. 5F illustrates a device user interface which can be switched to a plurality of user interface states according to some embodiments of the present invention. In the predetermined contact surface illustration 504, the thumb of the left hand corresponds to the user interface state of application 1, and the index finger of the right hand corresponds to the user interface state of application 2. If the thumb front end surface model of the left hand is inputted in the action area, then the device is switched to the user interface state of application 1; and if the index finger front end surface model of the right hand is inputted in the action area, then the device is switched to the user interface state of application 2.

Fig. 6 is a schematic diagram of the logic structure of an apparatus for identifying and unlocking with a contact surface model implemented on the basis of the hardware structure of the portable electronic device shown in Fig. 1 of the present invention, the apparatus is a function module in the portable electronic device, and the present invention does not limit the hardware structure of the device as long as it can complete the function of the apparatus of the present invention, and the device includes: a predefinition module, a detection judgment module, and a state switching module.

The predefinition module is used for associating a predefined contact surface shape with a user interface state;
the detection judgment module is used for detecting and judging whether a contact surface shape formed by a user on a touch screen is the same as or similar to the predefined contact surface shape; if they are the same or similar, then notifying a state switching module to perform state switching; and
the state switching module is used for performing device active state switching according to the judgment result of the detection judgment module.

Preferably, the predefinition module associates a plurality of predefined contact surface shaped with one or more user interface states, and stores the corresponding relationship into the memory; when the detection judgment module detects that a contact surface shape formed by the user on the touch screen is the same as or similar to the predefined contact surface shape or simultaneously detects that a plurality of contact surface shapes formed by the user on the touch screen are the same as or similar to a plurality of predefined contact surface shapes, the state switching module switches the device to the user interface state corresponding to the one or more predefined contact surface shapes.

Preferably, the user interface state includes a user interface locking state and a user interface unlocking state, and the predefined contact surface shape includes a predefined contact surface shape for unlocking the user interface; if the device is in the user interface locking state, when the device detects that the contact surface shape formed by the user on the touch screen is the same as or similar to the predefined contact surface shape for unlocking the user interface, the state switching module switches the device to the user interface unlocking state.

Preferably, the user interface state includes a user interface state when an application is running; if the device is in the user interface locking state, when the detection judgment module detects that the contact surface shape formed by the user on the touch screen is the same as or similar to the predefined contact surface shape, the state switching module unlocks the interface of the device and the application corresponding to the predefined contact surface shape runs so as to switch the device to the user interface state when the corresponding application is running.

Preferably, the user interface state includes an application unlocking state, and the predefined contact surface shape includes a predefined contact surface shape for switching the application from the locking state to the unlocking state; if one certain application on the device is in the locking state, when the state switching module detects that the contact surface shape formed by the user on the touch screen is the same as or similar to the predefined contact surface shape for unlocking this application, then the state switching module unlocks this application.

Preferably, the detection judgment module detects the contact surface shape formed by the user on the touch screen in a set touch area, and the contact outside the set touch area is regarded as being invalid.

For the sake of illustration, the previous description is carried out by reference to particular embodiments. However, the above illustrative statement is not intended to exhaust or limit the present invention within the disclosed accurate form. According to this description, many modifications and changes are feasible. These embodiments are selected and described for illustrating the principle of the present invention and its practical applications in an optimized way, so that those skilled in the art can make the best use of the present invention and various embodiments with different modifications so as to be suitable for expected specific applications.

What is described above is merely preferred embodiments of the present invention and is not intended to limit the scope of protection of the present invention.

## Claims

1. A method for identifying and unlocking with a contact surface model, comprising:
associating a predefined contact surface shape with a user interface state, and when a device detects that a contact surface shape formed by a user on a touch screen is the same as or similar to the predefined contact surface shape, switching the device to the user interface state corresponding to the predefined contact surface shape.

2. The method according to claim 1, wherein a plurality of predefined contact surface shapes are associated with one or more user interface states, and when it is detected that a contact surface shape formed by the user on the touch screen is the same as or similar to a predefined contact surface shape or it is detected that a plurality of contact surface shapes formed by the user on the touch screen are the same as or similar to a plurality of predefined contact surface shapes simultaneously, the device is switched to the user interface state corresponding to the one or more predefined contact surface shapes.

3. The method according to claim 1 or 2, wherein the user interface state comprises a user interface locking state and a user interface unlocking state, and the predefined contact surface shape comprises a predefined contact surface shape for unlocking the user interface; if the device is in the user interface locking state, when the device detects that the contact surface shape formed by the user on the touch screen is the same as or similar to the predefined contact surface shape for unlocking the user interface, the device is switched to the user interface unlocking state.

4. The method according to claim 1 or 2, wherein the user interface state comprises a user interface state when an application is running; if the device is in the user interface locking state, when the detects that the contact surface shape formed by the user on the touch screen is the same as or similar to the predefined contact surface shape, the interface of the device is locked and an application corresponding to the predefined contact surface shape runs so as to switch the device to the user interface state when the corresponding application is running.

5. The method according to claim 1 or 2, wherein the user interface state comprises an application unlocking state, and the predefined contact surface shape comprises a predefined contact surface shape for switching the application from the locking state to the unlocking state; if one certain application on the device is in the locking state, when the device detects that the contact surface shape formed by the user on the touch screen is the same as or similar to the predefined contact surface shape for unlocking the application, then that application is unlocked.

6. The method according to claim 1 or 2, wherein when detecting the contact surface shape formed by the user on the touch screen, a touch area for detecting an input is formulated and prompted, and a contact outside the formulated touch area is regarded as being invalid.

7. An apparatus for identifying and unlocking with a contact surface model, comprising:
a predefinition module for associating a predefined contact surface shape with a user interface state;
a detection judgment module for detecting and judging whether a contact surface shape formed by a user on a touch screen is the same as or similar to the predefined contact surface shape; if the contact surface shape formed by a user on a touch screen is the same as or similar to the predefined contact surface shape, notifying a state switching module to perform state switching; and
the state switching module for performing device active state switching according to a judgment result of the detection judgment module.

8. The apparatus according to claim 7, wherein the predefinition module associates a plurality of predefined contact surface shaped with one or more user interface states; when the detection judgment module detects that a contact surface shape formed by the user on the touch screen is the same as or similar to the predefined contact surface shape or detects that a plurality of contact surface shapes formed by the user on the touch screen are the same as or similar to the plurality of predefined contact surface shapes simultaneously, the state switching module switches the device to the user interface state corresponding to the one or more predefined contact surface shapes.

9. The apparatus according to claim 7 or 8, wherein the user interface state comprises a user interface locking state and a user interface unlocking state, and the predefined contact surface shape comprises a predefined contact surface shape for unlocking the user interface; if the device is in the user interface locking state currently, when the detection judgment module detects that the contact surface shape formed by the user on the touch screen is the same as or similar to the predefined contact surface shape for unlocking the user interface, the state switching module switches the device to the user interface unlocking state.

10. The apparatus according to claim 7 or 8, wherein the user interface state comprises a user interface state when an application is running; if the device is in the user interface locking state currently, when the detection judgment module detects that the contact surface shape formed by the user on the touch screen is the same as or similar to the predefined contact surface shape, the state switching module unlocks the interface of the device and an application corresponding to the predefined contact surface shape runs so as to switch the device to the user interface state when the corresponding application is running.

11. The apparatus according to claim 7 or 8, wherein the user interface state comprises an application unlocking state, and the predefined contact surface shape comprises a predefined contact surface shape for switching the application from the locking state to the unlocking state; if one certain application on the device is in the locking state, when the detection judgment module detects that the contact surface shape formed by the user on the touch screen is the same as or similar to the predefined contact surface shape for unlocking that application, then the state switching module unlocks that application.

12. The apparatus according to claim 7 or 8, wherein the detection judgment module detects the contact surface shape formed by the user on the touch screen in a set touch area, and a contact outside the set touch area is regarded as being invalid.
